(19) Europäisches Patentamt

European Patent Office

Office européen des brevets

(11) Veröffentlichungsnummer: **0 262 377 B1**

(12) **EUROPÄISCHE PATENTSCHRIFT**

(45) Veröffentlichungstag der Patentschrift: **15.04.92**

(21) Anmeldenummer: **87112204.0**

(22) Anmeldetag: **22.08.87**

(51) Int. Cl.⁵: **C04B 28/14**, C04B 38/02, E21F 15/00, //(C04B28/14, 22:10,22:14,22:16)

(54) Verfahren zum Verfüllen von Hohlräumen im Bergbau.

(30) Priorität: **29.08.86 DE 3629477**

(43) Veröffentlichungstag der Anmeldung:
**06.04.88 Patentblatt 88/14**

(45) Bekanntmachung des Hinweises auf die
Patenterteilung:
**15.04.92 Patentblatt 92/16**

(84) Benannte Vertragsstaaten:
**AT BE CH DE FR GB IT LI NL**

(56) Entgegenhaltungen:
**EP-A- 0 094 331**
**DE-C- 848 622**
**US-A- 1 745 635**
**US-A- 1 912 702**
**US-A- 2 292 616**

(73) Patentinhaber: **BASF Aktiengesellschaft**
**Carl-Bosch-Strasse 38**
**W-6700 Ludwigshafen(DE)**

(72) Erfinder: **Leutner, Bernd, Dr.**
**Taunusstrasse 17**
**W-6710 Frankenthal(DE)**
Erfinder: **Mueller, Berthold, Dr.**
**Darmstaedter Strasse 103**
**W-6140 Bensheim 3(DE)**
Erfinder: **Volkenborn, Wilhelm**
**Ziegeleistrasse 9**
**W-4370 Marl(DE)**

**Beschreibung**

Die vorliegende Erfindung betrifft ein Verfahren zum Verfüllen von Hohlräumen im Bergbau durch Einbringen einer Mischung, bestehend aus einem $CO_2$-entwickelnden, schäumenden und sich verfestigenden Brei oder Schlamm aus vorwiegend alpha-Halbhydrat, alpha-$CaSO_4 . 0,5 H_2O$, Alkali-oder Erdalkalicarbonat und Wasser.

Zum Verfüllen von Hohlräumen im Bergbau, insbesondere von Hohlräumen zwischen Gebirge und Verzug beim Strecken- oder Tunnelbau, werden unterschiedliche Verfahren eingesetzt. So kann man die durch bergmännischen Abbau entstandenen Hohlräume durch Einbringen von losem Gestein ausfüllen. Hierbei verbleibt jedoch stets ein gewisser Anteil von Hohlraum zwischen dem Gestein zurück, der bis zu ca. 30 % betragen kann, wodurch ein Einströmen von Grubengas in die Strecke nicht mit absoluter Sicherheit ausgeschlossen werden kann. Ein weiteres Verfahren ist das Einbringen von Phenolformaldehydschäumen. Dieses Verfahren ist jedoch ungeeignet, wenn Anforderungen an die Festigkeit gestellt werden. Außerdem bedarf es beim Einsatz von Schäumen auf organischer Basis besonderer Maßnahmen im Hinblick auf Feuersicherheit.

Bei Anforderung an die Festigkeit des Verfüllmaterials werden in die Hohlräume in der Regel mit Wasser abbindende Verbindungen in Form von Schlämmen oder Breien eingebracht. Diese haben entweder Zement oder ähnliche hydraulisch abbindende Stoffe zur Grundlage oder wasserfreie Calciumsulfate bzw. Calciumsulfathalbhydrate, die sich in Gegenwart von Wasser zu Gips, $CaSO_4 . 2 H_2O$, verfestigen. Mit diesen Produkten erreicht man zwar eine Ausfüllung mit einem Material relativ hoher Druckfestigkeit, es ist aber infolge der Fließfähigkeit der Schlämme sehr schwierig, die obersten Stellen der Hohlräume restlos auszufüllen.

In der Patentliteratur sind verschiedene Verfahren und Möglichkeiten zur Lösung der anstehenden Probleme aufgezeigt. So beschreibt beispielsweise die DE-PS 1 091 963 "ein Verfahren zum Ausfüllen von mit Grubenausbauen in Verbindung stehenden leeren Räumen "..." durch Einpumpen eines aufblähbaren Werkstoffes, der vor dem Erhärten aufgebläht wird." Es wird aber keinerlei Lehre darüber gegeben, welche aufblähbaren Werkstoffe speziell herangezogen werden sollen. Die Anwendung von Gips wird nicht erwähnt.

Die DE-OS 27 24 599 beansprucht "ein Verfahren zum Herstellen einer aufblähbaren, in einen festen Aggregatzustand übergehenden Masse zum Ausfüllen von mit Grubenausbauten in Verbindung stehenden leeren Räumen, wobei diese Masse aus Flugasche, Kalk, Sand und Aluminiumpulver besteht". Die Verwendung von Aluminiumpulver führt jedoch zu einer Entwicklung von Wasserstoffgas als Treibgas, so daß stets die Gefahr der Bildung von Knallgasgemischen gegeben ist.

Die E-PS 94 331 lehrt, daß Absperrungen von Bergwerksstollen mittels Leichtgips oder Leichtanhydrit hergestellt werden können, wobei gebrannter Gips oder Anhydrit mit einem stabilen wäßrigen Schaum vermischt wird, der aus einem flüssigen Schäummittel und Wasser besteht. Derartige Schaumverfahren haben aber den Nachteil, daß der Schaum im noch nicht verfestigten Zustand leicht kollabieren kann und daß eine homogene Vermischung von Schaum und Gipsbrei nur schwer zu erzielen ist.

Ein verschäumter Gips läßt sich auch nach der E-PS 26 905 durch Vermischen von Calciumsulfat-Halbhydrat, $CaSO_4 . 0,5 H_2O$, mit speziellen Polyvinylalkoholen und Borsäure sowie mit Polyurethan als Schaumkomponente herstellen. Diese Schaumgipse sind allerdings nur für die Herstellung von Bauelementen gedacht. Die Verwendung von organischen Komponenten im Bergbau stößt - wie bereits erwähnt - auf Sicherheitsbedenken gerade im Hinblick auf Brandgefahr.

In der DE-OS 15 71 575 ist die Herstellung von geschäumten Gipsgußstücken beschrieben. Hier wird als Gipskomponente alpha-Halbhydrat, alpha-$CaSO_4 . 0,5 H_2O$, eingesetzt, das durch Kohlendioxidgas verschäumt wird, welches man in situ durch Umsetzung von Calciumcarbonat mit Schwefelsäure erzeugt. Die Trockendichte des geschäumten Endproduktes darf gemäß der Offenlegungsschrift einen Wert von 0,6 - 1,0 nicht überschreiten. In die Aufschlämmung von Calcium-alpha-Halbhydrat mit Wasser kann ein Verzögerer eingerührt werden. Abgesehen davon, daß dieses Verfahren nur zur Herstellung von geschäumten Gipsgußstücken dient, ist ein gravierender Nachteil in der Verwendung von Schwefelsäure zu sehen, da diese im Bergbau, zumindest im Untertagebergbau, auf große Sicherheitsbedenken stößt. In der Bundesrepublik Deutschland ist daher eine Zulassung von Schwefelsäure zum vorgesehenen Zweck des Verschäumens untertage von den Bergaufsichtsbehörden außerordentlich unwahrscheinlich.

Durch die aufgeführten Nachteile bei der Herstellung von verschäumtem Ausfüllmaterial für den Bergbau, wie die der Brand-oder gar Explosionsgefahr, einer zu geringen Festigkeit oder des nicht ausreichenden Verschließens der Hohlräume sowie der Verätzungsgefahr durch Schwefelsäure, stellte sich die Aufgabe nach einem Verfahren, das bei ausreichender Festigkeit, Nichtbrennbarkeit und schneller Versteifung der Materialien eine vollständige Ausfüllung auch der letzten Hohlräume bewirkt und das zudem noch für den Bergmann ausreichend sicher ist. Nach einem derartigen Verfahren oder Material wird besonders beim Ausbau von Tunnel bzw. Strecken gesucht. Die zwischen dem Streckenausbau und der Tunnelwandung, dem Gebirge, vorhandenen Hohlräume müssen hier vollständig verfüllt werden, insbesondere am Deckenfirst, um eine Lockerung des Gesteins, bedingt durch den Gebirgsdruck, zu vermeiden.

Diese Aufgabe wird erfindungsgemäß dadurch gelöst, daß die oben angeführte Mischung vor ihrem Einbringen in die zu verfüllenden Hohlräume mit einer Hydrogensulfat-haltigen wäßrigen Lösung oder Suspension eines oder mehrerer Metalle vermischt wird. Der Hydrogensulfat-haltigen wäßrigen Lösung kann zusätzlich zur Regulierung der Abbindegeschwindigkeit vor oder während der Vermischung mit dem Gipsbrei wasserlösliches Phosphate in Form von Phosphatsalzen oder Mono- oder Polyphoshorsäuren zugesetzt werden.

Durch die Volumenausdehnung des sich verfestigenden Materials wird bewirkt, daß die Hohlräume hundertprozentig ausgefüllt werden. Hierdurch kann eine Lockerung des Wandungsgesteines und somit auch eine Ansammlung von eindringenden Schlagwettern vermieden werden.

Das erfindungsgemäße Verfahren wird im folgenden näher erläutert.

Aus einem feinteiligen alpha-Halbhydratpulver, welches eine möglichst hohe Schüttdichte besitzt, wird unter Einsatz von wenig Wasser ein Brei hergestellt. Die Schüttdichte des alpha-Halbhydrats soll nach Möglichkeit oberhalb von 1,2 g/cm$^3$ betragen. Derartige alpha-Halbhydratsorten lassen sich durch kontinuierliche oder diskontinuierliche Autoklavenverfahren mit einer Schüttdichte bis zu maximal 1,6 g/cm$^3$ oder leicht darüber herstellen. Als Ausgangsmaterial werden gewöhnlich billige Abfallgipse, beispielsweise aus der herstellung von Phosphorsäure oder aus der Rauchgasentschwefelung, herangezogen.

Zur Vermeidung einer vorschnellen Abbindung setzt man dem Brei aus alpha-Halbhydrat und Wasser zweckmäßigerweise Verzögerer zu. Als Verzögerer können alle in der Gipstechnologie für diesen Zweck bekannten Stoffe verwendet werden. Übliche Verzögerer sind beispielsweise die Fruchtsäuren Weinsäure oder Zitronensäure oder auch Bernsteinsäure, Sulfobernsteinsäure sowie andere Di- und Tricarbonsäuren. Weitere Verzögerer sind Glukonate, beispielsweise Natriumgluconat, oder Carboxycellulosen, beispielsweise Methylcellulose. Eine verzögernde Wirkung ist ebenfalls von kolloiden Eiweißstoffen wie Leim bekannt. Auch direkt synthetisch hergestellte Produkte, wie Retardan®, ein Na- oder Ca-Salz von Polykondensaten aus gamma-Aminobuttersäure und Formaldehyd, befinden sich im Handel und sind als Verzögerer gut geeignet.

In den wäßrigen Brei wird als Schaumbildner ein bei Säurezusatz $CO_2$-entwickelndes Metallsalz, z.B. Calciumcarbonat, eingerührt. Andere Carbonate, wie Magnesiumcarbonat, Strontium- oder Bariumcarbonat oder auch beispielsweise Kaliumcarbonat, sind ebenfalls verwendbar. Die Menge des Carbonats woll zwischen 0,2 und etwa 2 kg Carbonat, bezogen auf 100 kg alpha-Halbhydrat, betragen. Größere oder kleinere Mengen an Carbonat sind ebenfalls einsetzbar; sie ergeben allerdings einen entsprechend leichten oder dichten verschäumten Gips.

Der aus alpha-Halbhydrat hergestellte Gipsbrei muß innerhalb einer relativ kurzen Zeit noch vor dem Abbinden, d.h. zweckmäßigerweise innerhalb 3 Stunden, günstiger noch innerhalb von 1 Stunde, verschäumt werden, indem er intensiv und kurzzeitig mit einer Hydrogensulfat-haltigen wäßrigen Lösung oder auch Suspension vermischt wird. Die Hydrogensulfat-haltige Lösung kann untertage durch Auflösen eines Metallhydrogensulfates in möglichst wenig Wasser hergestellt werden. Es lassen sich aber selbstverständlich auch nach den üblichen Verfahren der Chemie schon übertage hergestellte wäßrige Lösungen an Hydrogensulfaten einsetzen. Verwendet werden können ganz allgemein alle Hydrogensulfate der Haupt- und Nebengruppenmetalle einschließlich Ammonium. Sie besitzen die allgemeine Formel $Me_n^{Z+} (SO_4)_m \cdot xH_2SO_4$, wobei $Me^{Z+}$ ein Z-wertiges Metallkation, n und m eine ganze Zahl mit der Verknüpfung

$$m = \frac{Z \cdot n}{2} \quad ,$$

sowie x eine Zahl zwischen 1 und etwa 5 darstellen. Als besonders geeignet haben sich die Hydrogensulfate der Alkalimetalle, insbesondere Kaliumhydrogensulfat, erwiesen. So bildet Kaliumhydrogensulfat bei der Umsetzung mit $CaCO_3$ bzw. auch mit $CaSO_4$-Salzen das schwerlösliche Doppelsalz Syngenit, $K_2SO_4 \cdot CaSO_4 \cdot H_2O$, wodurch ein Auslaugen von Alkalisalz erschwert wird. Das Kaliumion läßt sich ganz oder teilweise durch $NH_4^+$ ersetzen. Analog kann aus Natriumhydrogensulfat und $CaCO_3$ bzw. Calciumsulfaten Glauberit, $Na_2SO_4 \cdot CaSO_4$, entstehen. Um den Wasseranteil im verschäumten Gips möglichst niedrig zu halten, verwendet man zweckmäßigerweise konzentrierte Lösungen. Die Konzentration der Hydrogensulfat-haltigen Lösung kann bis an die Sättigungskonzentration gehen. Der Hydrogensulfat-haltigen Lösung wie auch dem verschäumten Gips können schaumstabilisierende Mittel, wie beispielsweise Tenside oder organische Polymere, zugemischt werden.

Außer den genannten Stoffen können dem Gipsbrei noch weitere Hilfsstoffe zugesetzt werden. Dies sind beispielsweise Verflüssiger, die die Viskosität des Gipsbreies herabsetzen. Als geeignete Gipsverflüssiger können insbesondere handelsübliche Melaminharze verwendet werden. Diese stellen Polykondensate aus Melamin, Formaldehyd und Sulfonat her, üblicherweise in einem Molverhältnis von 1 : 6 : 3 bis zu 1 : 2 : 1. Die Anwendungsmenge der Gipsverflüssiger liegt in einem Bereich zwischen 0,05 bis 3 Gew.-%, bezogen auf Gips, vorzugsweise im Bereich von 0,3 bis 1,5 Gew.-%. Dem Gipsbrei können ebenfalls inerte Füllstoffe, wie z.B. Sand, gemahlenes Gestein, Flugasche und dergleichen, beigefügt werden. Die Beimengung von Anhydrit, $CaSO_4$, ist ebenfalls möglich. Zur Anhebung der Zugfestigkeit lassen sich faserförmige Stoffe einarbeiten.

Die Vermischung des Gipsbreies mit der Hydrogensulfat-haltigen Lösung kann nach herkömmlichen Methoden geschehen, beispielsweise unter Verwendung von festen statischen Mischern oder auch durch schnellaufende Mischwerkzeuge. Wichtig ist nur, daß die Hydrogensulfat-saure Lösung mit dem alpha-Halbhydrat und dem Carbonat schnell und homogen vereinigt wird.

Beispiele

Beispiel 1

Verwendung von Kaliumhydrogensulfat als Schaummittel und Abbindebeschleuniger

In einem Rührgefäß wurden 25 kg Wasser vorgelegt und darin als Verzögerer 25 g Weinsäure sowie 25 g Natriumglukonat (ber. 100 %) gelöst. Darauf wurden 100 kg alpha-Halbhydrat, alpha-$CaSO_4$.0,5 $H_2O$, über einen Trichter unter Rühren innerhalb von 5 Minuten hinzugeschüttet und anschließend 0,74 kg Calciumcarbonat in Form eines feinteiligen Pulvers mit einem mittleren Korndurchmesser von 1,2 $\mu$m. In den Brei wurden zusätzlich noch 10 g Calciumhydroxid, $Ca(OH)_2$, eingerührt, um die gesamtae Suspension leicht alkalisch zu stellen. Nach einer Mischzeit von etwa 15 Minuten wurde der Gipsbrei innerhalb von 5 Minuten in einen Hohlraum entsprechender Größe (ca. 80 1) mittels einer Mohnopumpe über einen Schlauch eingepumpt. Unmittelbar vor dem Schlauchende wurde der Gipsbrei mit einer Lösung an Kaliumhydrogensulfat in Wasser vermischt. Die Kaliumhydrogensulfatlösung wurde aus 2,9 kg Kaliumhydrogensulfat, $KHSO_4$, und 3 kg Wasser bei 80°C hergestellt. Diese Lösung wurde zum Gipsbrei so zudosiert, daß sie in der gleichen Zeit wie der Gipsbrei aufgebraucht war. Vor- und Nachlauf an Gipsbrei wurden verworfen. Man erhielt in dem Hohlraum einen sehr schnell erstarrenden porösen Gipskörper.

Aus der mit dem Gipsbrei und der Hydrogensulfatlösung eingebrachten Wassermenge errechnet sich ein Wasser-Gips-Wert von 0,28.

Nach 7 Tagen sägte man aus dem erstarrten porösen Gipskörper Quader der Größe 6,25 x 4 x 4 cm und bestimmte gemäß DIN 1168 Bruchbelastung und Bruchfestigkeit. Diese lagen bei einem Mittelwert aus jeweils 8 Quadern aus dem Kopfteil bei 19 kN bzw. bei 6,7 N/mm² und bei ebenfalls 8 aus dem unteren Teil des Gipskörpers herausgesägten Quadern bei 26,8 kN bzw. bei 10,7 N/mm².

Beispiel 2

Verwendung einer phosphorsäurehaltigen Natriumhydrogensulfat-Lösung

Unter den gleichen Bedingungen und mit der gleichen Zusammensetzung wie in Beispiel 1 wurde eine Maische aus alpha-Halbhydrat hergestellt. Mit ihr wurde wie zuvor innerhalb von 5 Minuten unter intensivem Zumischen einer Lösung aus 1,97 kg Natriumhydrogensulfat, $NaHSO_4$, 0,63 kg 85 %iger Phosphorsäure sowie 4 kg Wasser ein Hohlraum von etwa 80 l verfüllt. Die Temperatur der Hydrogensulfat-haltigen Lösung lag bei 27°C. Man erhielt ebenfalls einen weniger schnell erstarrenden porösen Gipskörper.

Der errechnete Wasserwert beträgt 0,291.

Beispiel 3 bis 8

In der Tabelle 1 sind Beispiele für Verschäumungsrezepturen mit weiteren Hydrogensulfat-haltigen Lösungen bzw. Suspensionen wiedergegeben. Die Verfahrensweise der Gipsmaischeherstellung wie des Ausbringens erfolgte entsprechend den Angaben im Beispiel 1. Zur besseren Vergleichbarkeit der Rezepturen untereinander sind diese in der Tabelle auf jeweils 100 kg alpha-Halbhydrat normiert.

Bei den Angaben Verzögerer 1 und 2 in der Tabelle handelt es sich, sofern durch Index nichts anderes vermerkt ist, um 100 %ige Weinsäure (Verzögerer 1) sowie um das Natriumsalz der Gluconsäure (Verzögerer 2, berechnet 100 %), das als 50 %ige wäßrige Lösung eingesetzt wurde (siehe Tabelle 1).

4

Desgleichen wurde, falls nichts Gegenteiliges angegeben, als Carbonat ein schon in Beispiel 1 beschriebenes feinpulvriges $CaCO_3$ verwendet.

**Tabelle 1: Weitere Beispiele für Hydrogensulfat-haltige Verschäumungsrezepturen**

| | | Beispiel-Nr. | 3 | 4 | 5 | 6 | 7 | 8 |
|---|---|---|---|---|---|---|---|---|
| Gipsbrei | alpha-CaSO$_4$.0,5 H$_2$O | [kg] | 100 | 100 | 100 | 100 | 100 | 100 |
| | Wasser | [kg] | 25 | 24 | 25 | 24 | 24 | 21,7 |
| | Verzögerer 1 | [g] | 25 | 30 | 25 | 10[5] | 50 | – |
| | Verzögerer 2 | [g] | 25 | 30 | 25 | – | 50 | – |
| | Carbonat | [kg] | 0,74 | 0,9[3] | 0,5 | 0,6 | 0,6[3] | 0,3[9] |
| | Calciumhydroxid | [g] | 100 | 100 | 150 | 100 | 100 | – |
| Hydrogensulfat-haltige Flüssigkeit | Metallhydrogensulfat | [kg] | 0,98[1] | 0,9[2] | 1,3[4] | 0,86[6] | 1,12[7] | 0,5[8] |
| | Wasser | [k] | 3 | 4 | 5 | 6 | 6 | 4 |
| | Phosphorsäure (85%) | [kg] | 0,95 | 1 | – | – | – | – |
| | Flüssig- bzw. NaH$_2$PO$_4$ | [kg] | – | – | 0,3 | – | – | – |

1) $NaHSO_4$
2) $NH_4HSO_4$
3) $CaCO_3$ mit einer mittleren Korngröße von 0,2 mm
4) $KHSO_4$
5) Retardan F (Chemische Fabrik Grünau GmbH)
6) $KHSO_4 + Al(HSO_4)_3$ im Molverhältnis 1:1
7) $Fe(HSO_4)_2$
8) $KH_3(SO_4)_2$
9) $NaHCO_3$

## Patentansprüche

1. Verfahren zum Verfüllen von Hohlräumen im Bergbau durch Einbringen einer Mischung, bestehend aus einem $CO_2$-entwickelnden, schäumenden und sich verfestigenden Brei oder Schlamm aus vorwiegend alpha-Halbhydrat, alpha-CaSO$_4$.0,5 H$_2$O, Alkali- oder Erdalkalicarbonat und Wasser, dadurch gekennzeichnet, daß die Mischung vor ihrem Einbringen in die zu verfüllenden Hohlräume mit einer Hydrogensulfat-haltigen wäßriger Lösung oder Suspension eines oder mehrerer Metalle vermischt wird.

2. Verfahren nach Anspruch 1, dadurch gekennzeichnet, daß der Hydrogensulfat-haltigen wäßrigen Lö-

EP 0 262 377 B1

sung vor oder während der Vermischung mit dem Gipsbrei wasserlösliches Phosphat in Form von Phosphatsalzen oder Mono- oder Polyphosphorsäuren zugesetzt wird.

3. Verfahren nach Anspruch 1, dadurch gekennzeichnet, daß der Mischung aus alpha-Halbhydrat und Wasser mindestens ein Gipsers tarrungsverzögerer zugesetzt wird.

**Claims**

1. A process for filling cavities in mining by introducing a mixture consisting of a slurry or sludge which evolves $CO_2$, foams and solidifies and predominantly comprises alpha-hemihydrate, alpha-$CaSO_4$ . 0.5 $H_2O$, an alkali metal or an alkaline earth metal carbonate and water, wherein the mixture is mixed with a bisulfate-containing aqueous solution or suspension of one or more metals before being introduced into the cavities to be filled.

2. A process as claimed in claim 1, wherein water-soluble phosphate in the form of a phosphate salt or mono- or polyphosphoric acid is added to the bisulfate-containing aqueous solution before or during mixing with the gypsum slurry.

3. A process as claimed in claim 1, wherein one or more setting retardants for gypsum are added to the mixture of alpha-hemihydrate and water.

**Revendications**

1. Procédé pour obturer les cavités dans les exploitations minières par introduction d'un mélange consistant en une bouillie ou pâte dégageant du $CO_2$, expansible et se solidifiant, qui consiste elle-même principalement en alpha-hémihydrate, alpha-$CaSO_4$,0,5 $H_2O$, un carbonate alcalin ou alcalino-terreux et de l'eau, caractérisé en ce que, avant introduction du mélange dans les cavités à obturer, on lui ajoute et on mélange une solution ou suspension aqueuse contenant un hydrogénosulfate d'un ou plusieurs métaux.

2. Procédé selon la revendication 1, caractérisé en ce que la solution aqueuse contenant un hydrogénosulfate, avant ou durant le mélange avec la bouillie de plâtre, est additionnée d'un phosphate soluble dans l'eau à l'état de sel de l'acide phosphorique ou d'acide mono- ou poly-phosphorique.

3. Procédé selon la revendication 1, caractérisé en ce que l'on ajoute au mélange de l'alpha-hémihydrate et d'eau au moins un retardateur de prise du plâtre.

6